# EUROPEAN PATENT SPECIFICATION

(11) **EP 2 880 371 B1**
(45) Date of publication and mention of the grant of the patent: **14.12.2016**
(21) Application number: 13742723.3
(22) Date of filing: 26.07.2013
(51) Int. Cl.: F24F 13/32, E04B 1/19

(54) **MODULAR FRAMEWORK SUPPORT SYSTEMS**
STÜTZSYSTEME FÜR MODULARES GERÜST
SYSTÈMES DE SUPPORT DE STRUCTURE MODULAIRES

(30) Priority: 02.08.2012 GB 201213733
(43) Date of publication of application: 10.06.2015
(73) Proprietor: Big Foot Systems Limited, Hailsham East Sussex BN27 3WA (GB)
(72) Inventor: SAICH, Claire Louise, Hailsham Sussex BN27 3WA (GB); ROSE, Joseph Nicholas, Hailsham Sussex BN27 3WA (GB)
(74) Representative: Hancox, Jonathan Christopher
(86) International application number: PCT/GB2013/052009
(87) International publication number: WO 2014/020322

(56) References cited:
- EP-A1- 0 490 483
- EP-A1- 2 461 114
- EP-A2- 1 890 091
- WO-A1-03/006835
- US-A- 4 989 826
- US-A1- 2003 010 391
- US-A1- 2003 182 873

## Description

The present invention relates to modular framework support systems. In particular, it relates to framework support systems of the non-penetrative type particularly used for supporting heating and ventilating apparatus and other service and plant apparatus on a roof of a building.

Modular framework support systems comprising a series of U-shaped channelled struts assembled into a framework are well known for supporting air conditioning and other plant apparatus on a roof of a building and spacing the plant from the roof material. There are many suppliers of such systems, but the components are typically not interchangeable. Two such manufacturers are Unistrut and Eurostrut (registered trade marks). The channels may be plain or slotted. The frameworks are also used in other areas, such as in suspending pipes and electrical cables from ceilings. However, when used to support plant on a roof, the systems require relatively large feet into which upright struts are placed in order to spread the weight of the framework and supported plant and equipment over the surface of the roof. The present invention seeks to overcome at least one of the problems of lack of interchangeability between systems.

US 2003/0182873 (Clasen et al.), over which claim 1 is characterised, discloses a modular roof equipment screening assembly. A support for a modular framework system the support comprising opposed parallel longitudinal walls defining a longitudinal channel, wherein said channel is formed as a socket having a base and an opening is disclosed.

Accordingly, the present invention provides a support for a modular framework system, the support comprising opposed parallel longitudinal walls defining a longitudinal channel, characterised in that the support comprises a planar foot from which the opposed parallel longitudinal walls upstand, in that the channel is divided by lateral walls into a plurality of framework support areas arranged symmetrically in pairs along the channel; and that each of at least a first pair of support areas is formed by a socket having a base and an opening, and each socket is provided with a projection extending from the base, the projection having a generally T- or Y-shaped form having a stem aligned with the longitudinal channel and an arm or arms extending laterally between the parallel longitudinal walls.

Preferably, each socket is provided with one or more elongate ribs between the base and the opening and extending into the socket. Preferably, each rib has a stepped configuration such that an operatively lower portion of the rib extends further into the socket than an operatively upper portion of the rib.

Preferably, a second pair of support areas is formed by a socket having a base and an opening and each socket is provided with one or more elongate ribs between the base and the opening and extending into the socket.

Preferably, the stem comprises a rib as defined above.

Advantageously, the sockets of the first support area have a lateral and a longitudinal dimension matched to cross-sectional dimensions of a first manufacturer's range of framework channels and the sockets of the second support area have a lateral and a longitudinal dimension matched to cross-sectional dimensions of a second manufacturer's range of framework channels.

Advantageously, the support further comprises a third pair of support areas each in the form of a platform having a through aperture for receipt of a threaded rod. Preferably, the platform comprises a nut-receiving area on an undersurface of the platform. More preferably, the nut-receiving area comprises a series of pinch ribs.

The above and other aspects of the present invention will now be described in further detail, by way of example only, with reference to the accompanying drawings, in which:
Figure 1 is a plan view of an embodiment of a modular framework support base in accordance with the present invention;
Figure 2 is a cross-sectional view along line A- A of Figure 1;
Figure 3 is a cross-sectional view along line B-B of Figure 1;
Figure 4 is a detail of the plan view of Figure 1;
Figure 5 is a perspective view of the base of Figure 1 with a pair of first framework channels;
Figure 6 is a perspective view of the base of Figure 1 with a pair of second framework channels;
Figure 7 is a plan view of the arrangement of Figure 5;
Figure 8 is a perspective view of the base of Figure 1 with a pair of third framework channels;
Figure 9 is a plan view of the arrangement of Figure 8;
Figure 10 is a perspective view of the base of Figure 1 with a pair of fourth framework channels;
Figure 11 is a plan view of the arrangement of Figure 10;
Figure 12 is a perspective view of the base of Figure 1 with a pair of threaded rods associated with third support area platforms;
Figure 13 is an underside perspective view of the arrangement of Figure 12; and
Figure 14 is a perspective view of the base of Figure 1 with a third framework channel inserted into a channel of the base.

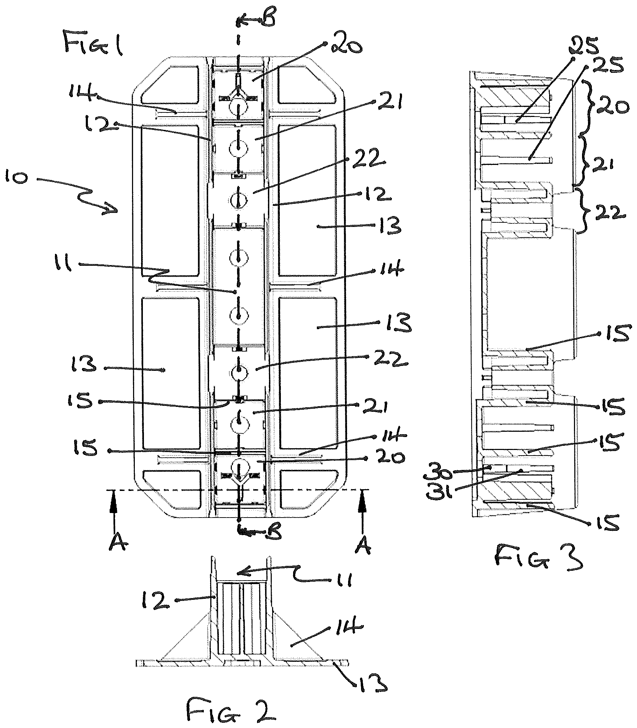

An embodiment of a modular framework support base 10 is shown in figures 1 to 4 and comprises a channel 11 formed between opposed parallel longitudinal walls 12 upstanding from a planar foot 13. Suitably, reinforcing ribs 14 are formed between walls 12 and foot 13 externally of foot 13. Suitably, the base is formed as a unitary element by injection moulding of a suitable plastics material, such as glass-reinforced nylon.

As illustrated most clearly in Figure 1, channel 11 is divided by lateral walls 15 between longitudinal walls 12 into a plurality of framework support areas 20,21,22 arranged symmetrically in matched pairs along the length of the channel.

In the embodiment shown, first and second support areas are formed as respective first and second support pockets or sockets 20,21 and are laterally dimensioned to match the maximum width dimensions of Unistrut (41mm) and Eurostrut (40mm) respectively. Channel 11 is dimensioned accordingly. Third support area 22 is formed to provide a platform for receipt of a threaded rod, as will be described in further detail below.

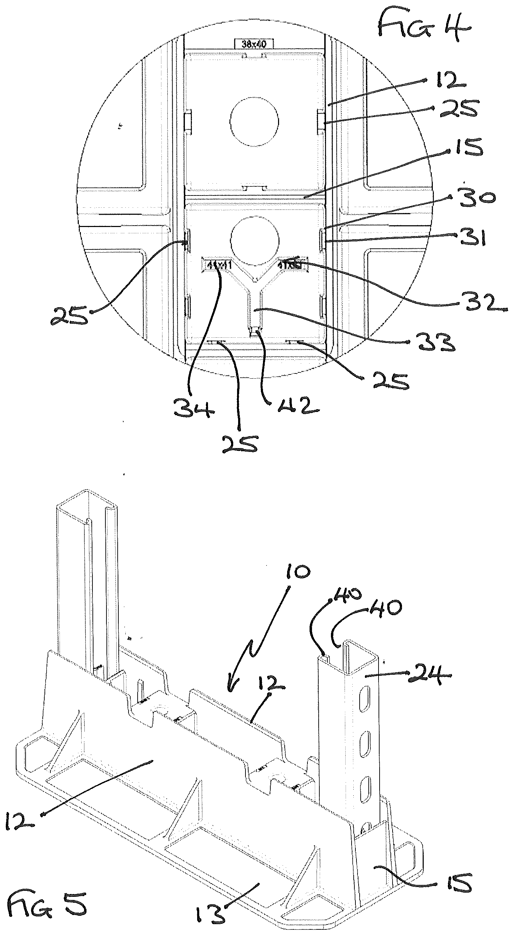

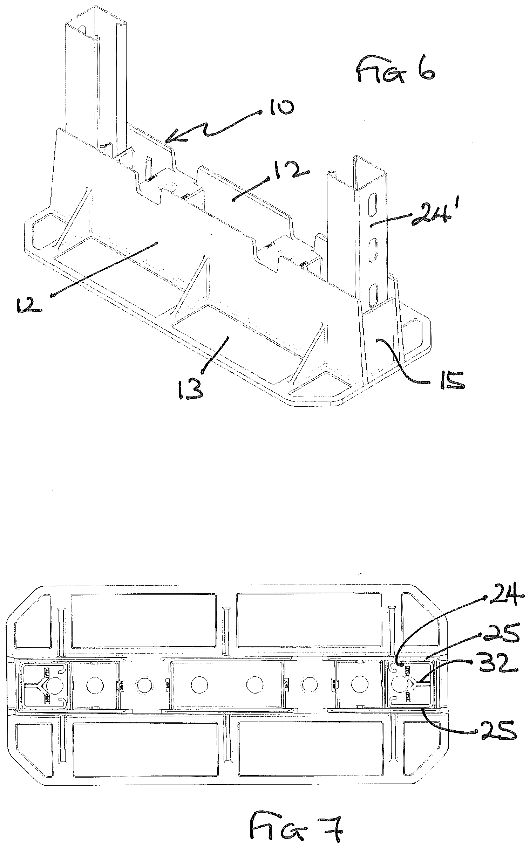

We will refer initially to first support socket 20, designed for Unistrut strut channels. Unistrut channels are formed to a wide range of designs, but typically conforming to two cross-sectional box sizes, 41mm x 41mm and 41mm x 21mm and are manufactured in several gauges, typically 12 gauge (2.66mm), 14 gauge (1.90mm) and 19 gauge (1.00mm). First support socket 20 is formed having lateral and longitudinal (with respect to the longitudinal axis of the base) dimensions slightly in excess of the 41mm dimension of the larger Unistrut channel. Thereby, the large channel 24 can be inserted into socket 20 as shown in Figures 5 to 7. Figure 5 shows the thicker gauge channel and Figure 6 shows the thinner gauge. Figure 7 is a plan view of the thicker gauge channel shown in Figure 5. As illustrated, in a typical framework construction, U-shaped channels 24 are arranged in pairs with their open sides facing inwardly.

As shown in Figures 2, 3 and 4, in accordance with the present invention, walls 12,15 enclosing socket 20 are each provided with one or more vertical elongate ribs 25 extending into the socket. Ribs 25 advantageously include a stepped portion such that an operatively lower portion 30 of each rib 25 extends further into socket 20 than upper portion 31. Ribs 25 act to hold channel 24 securely and the stepped portion allow the single socket design to hold both or all gauges of channel equally securely.

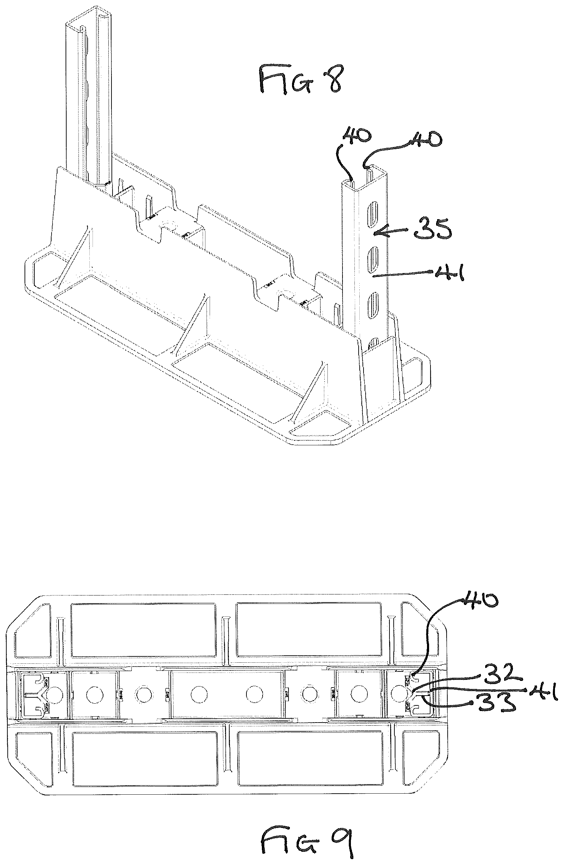

In accordance with the preferred embodiments of the present invention, the socket 20 is provided with an upwardly extending projection 32. As is most clearly seen in Figure 4, in the illustrated embodiment, projection 32 has a generally T- or Y-shaped form having a stem 33 aligned with the longitudinal axis of the base 10 and positioned generally centrally within socket 20; and arms 34 extending generally laterally between parallel longitudinal walls 12. As illustrated in Figure 9, projection 32 provides support surfaces for a half-depth Unistrut channel 35 (41mm x 21mm). Inserted in the same manner as the full-depth channel 24 described above, with its open face directed inwardly, curved edges 40 of channel 35 bear against arms 34 of projection 32 and the web 41 joining the two sides of channel 35 located within a space formed between stem 33 and adjacent wall 15 of socket 20. Advantageously, stem 33 is provided with a rib 42 with features corresponding to rib 25 described above.

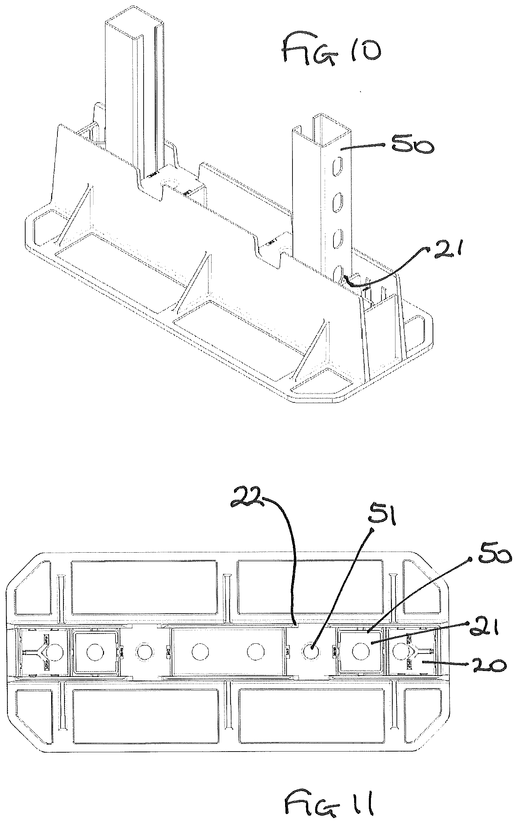

As shown in Figures 10 and 11, socket 21, adjacent socket 20, is dimensioned to receive a standard Eurostrut channel 50 in a similar manner as described above. As shown, socket 21 does not include a projection 32. In many framework constructions, only one size of channel is required and so no projection may be required to allow use of reduced size channels. However, a projection can be included where it is necessary to allow for the use of such channels. As described above in respect of socket 20, advantageously, the walls of socket 21 include ribs 25.

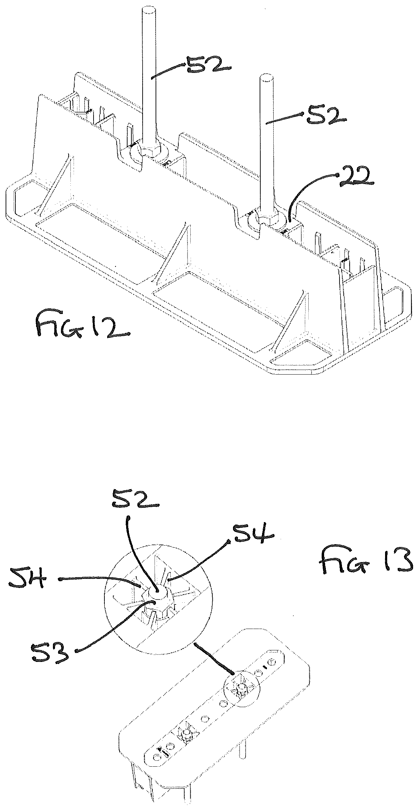

As illustrated in figures 11, 12 and 13, the base also includes a third support area in the form of a platform 22. Platform 22 includes an aperture 51 for receipt of a threaded rod or stud 52, the threaded portion extendable through aperture 51 for coupling with a nut 53 receivable between a series of pinch ribs 54.

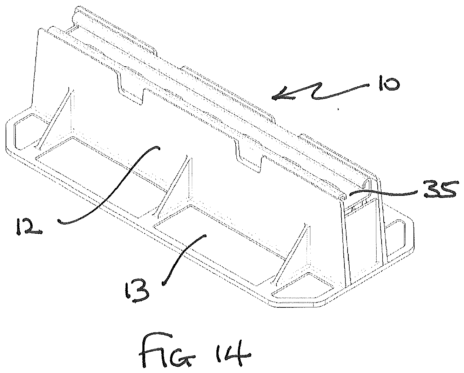

As shown in Figure 14, a channel can also be laid longitudinally along the base between longitudinal walls 12.

## Claims

1. A support (10) for a modular framework system, the support comprising opposed parallel longitudinal walls (12) defining a longitudinal channel (11), wherein the support (10) comprises a planar foot (13) from which the opposed parallel longitudinal walls (12) upstand, the channel (11) is divided by lateral walls (15) into a plurality of framework support areas (20, 21, 22) arranged symmetrically in pairs along the channel (11); and each of at least a first pair of support areas is formed as a socket (20) having a base and an opening, and each socket is provided with a projection (32) extending from the base, the projection having a generally T- or Y-shaped form having a stem (33) aligned with the longitudinal channel (11) and an arm or arms (34) extending laterally between the parallel longitudinal walls (12).

2. A support as claimed in Claim 1 comprising a second pair of support areas, formed by a socket (21) having a base and an opening and each socket is provided with one or more elongate ribs (25) between the base and the opening and extending into the socket.

3. A support as claimed in Claim 1 or 2, wherein each socket (20, 21) is provided with one or more elongate ribs (25) between the base and the opening and extending into the socket.

4. A support as claimed in Claim 3, wherein each rib (25) has a stepped configuration such that an operatively lower portion (30) of the rib extends further into the socket than an operatively upper portion (31) of the rib.

5. A support as claimed in any preceding Claim, wherein the stem (33) of the projection (32) comprises a rib having a stepped configuration such that an operatively lower portion of the rib extends further into the socket than an operatively upper portion of the rib.

6. A support as claimed in any preceding claim wherein sockets (20) of the first support area have a different lateral and/or longitudinal dimension compared to the sockets (21) of the second support area.

7. A support as claimed in any preceding claim further comprising a third pair of support areas each in the form of a platform (22) having a through aperture for receipt of a threaded rod.

8. A support as claimed in Claim 7 wherein the platform (22) comprises a nut-receiving area on an undersurface of the platform, preferably comprising a series of pinch ribs (54).

## Patentansprüche

1. Halterung (10) für ein modulares Rahmensystem, wobei die Halterung gegenüberliegende parallele Längswände (12) umfasst, welche einen Längskanal (11) definieren, wobei die Halterung (10) einen ebenen Fuß (13) umfasst, von welchem die gegenüberliegenden parallelen Längswände (12) nach oben stehen, der Kanal (11) durch Seitenwände (15) in eine Mehrzahl von Rahmenhalterungsbereichen (20, 21, 22) unterteilt ist, welche paarweise entlang des Kanals (11) symmetrisch angeordnet sind; und jeder des wenigstens einen ersten Paares von Halterungsbereichen als eine Fassung (20) mit einer Basis und einer Öffnung ausgebildet ist, und jede Fassung mit einem Vorsprung (32) versehen ist, welcher sich von der Basis erstreckt, wobei der Vorsprung eine im Wesentlichen T- oder Y-förmige Gestalt mit einem Schaft (33), welcher mit dem Längskanal (11) ausgerichtet ist, und einem Arm oder Armen (34) aufweist, welche sich zwischen den parallelen Längswänden (12) lateral erstrecken.

2. Halterung nach Anspruch 1, umfassend ein zweites Paar von Halterungsbereichen, welche durch eine Fassung (21) mit einer Basis und einer Öffnung gebildet sind, und jede Fassung mit einer oder mehreren länglichen Rippen (25) zwischen der Basis und der Öffnung versehen ist, und wobei sie sich in die Fassung erstrecken.

3. Halterung nach Anspruch 1 oder 2, wobei jede Fassung (20, 21) mit einer oder mehreren länglichen Rippen (25) zwischen der Basis und der Öffnung versehen ist, und wobei sie sich in die Fassung erstrecken.

4. Halterung nach Anspruch 3, wobei jede Rippe (25) derart eine gestufte Konfiguration aufweist, dass sich ein betriebsmäßig unterer Abschnitt (30) der Rippe weiter in die Fassung erstreckt als ein betriebsmäßig oberer Abschnitt (31) der Rippe.

5. Halterung nach einem der vorhergehenden Ansprüche, wobei der Schaft (33) des Vorsprungs (32) derart eine Rippe mit einer gestuften Konfiguration aufweist, dass sich ein betriebsmäßig unterer Abschnitt der Rippe weiter in die Fassung erstreckt als ein betriebsmäßig oberer Abschnitt der Rippe.

6. Halterung nach einem der vorhergehenden Ansprüche, wobei Fassungen (20) des ersten Halterungsbereichs eine unterschiedliche Seiten- und/oder Längsabmessung aufweisen, verglichen mit den Fassungen (21) des zweiten Halterungsbereichs.

7. Halterung nach einem der vorhergehenden Ansprüche, ferner umfassend ein drittes Paar von Halterungsbereichen, wobei jeder in der Gestalt einer Plattform (22) mit einer Durchgangsöffnung zur Aufnahme eines Gewindestabs vorliegt.

8. Halterung nach Anspruch 7, wobei die Plattform (22) einen mutter-aufnehmenden Bereich an einer Unterfläche der Plattform umfasst, vorzugsweise eine Reihe von Kneifrippen (54) umfasst.

## Revendications

1. Support (10) destiné à un système de structure modulaire, le support comprenant des parois longitudinales parallèles opposées (12) définissant un canal longitudinal (11), où le support (10) comprend un pied plan (13) à partir duquel les parois longitudinales parallèles opposées (12) s'étendent verticalement, le canal (11) est divisé par des parois latérales (15) en une pluralité de zones de support de structure (20, 21, 22) agencées de manière symétrique par paires le long du canal (11); et chaque zone d'au moins une première paire de zones de support est formée sous la forme d'une douille (20) ayant une base et une ouverture, et chaque douille est dotée d'une protubérance (32) s'étendant depuis la base, la protubérance ayant globalement une forme de T ou de Y présentant une patte (33) alignée avec le canal longitudinal (11) et un bras ou des bras (34) s'étendant latéralement entre les parois longitudinales parallèles (12).

2. Support selon la revendication 1, comprenant une deuxième paire de zones de support, formées par une douille (21) ayant une base et une ouverture et chaque douille est dotée d'une ou de plusieurs nervures allongées (25) entre la base et l'ouverture et s'étendant dans la douille.

3. Support selon la revendication 1 ou 2, dans lequel chaque douille (20, 21) est dotée d'une ou de plusieurs nervures allongées (25) entre la base et l'ouverture et s'étendant dans la douille.

4. Support selon la revendication 3, dans lequel chaque nervure (25) présente une configuration échelonnée de telle sorte qu'une partie fonctionnellement inférieure (30) de la nervure s'étend davantage dans la douille qu'une partie fonctionnellement supérieure (31) de la nervure.

5. Support selon l'une quelconque des revendications précédentes, dans lequel la patte (33) de la protubérance (32) comprend une nervure présentant une configuration échelonnée de telle sorte qu'une partie fonctionnellement inférieure de la nervure s'étend davantage dans la douille qu'une partie fonctionnellement supérieure de la nervure.

6. Support selon l'une quelconque des revendications précédentes, dans lequel des douilles (20) de la première zone de support ont une dimension latérale et/ou longitudinale différente par comparaison aux douilles (21) de la deuxième zone de support.

7. Support selon l'une quelconque des revendications précédentes, comprenant en outre une troisième paire de zones de support, chacune ayant la forme d'une plateforme (22) ayant une ouverture traversante afin de recevoir une tige filetée.

8. Support selon la revendication 7, dans lequel la plateforme (22) comprend une zone de réception d'écrou sur une face inférieure de la plateforme, comprenant de préférence une série de nervures de blocage (54).
